# EUROPEAN PATENT SPECIFICATION

(11) **EP 1 829 775 B1**
(45) Date of publication and mention of the grant of the patent: **09.09.2009**
(21) Application number: 07004268.4
(22) Date of filing: 01.03.2007
(51) Int. Cl.: B62J 23/00

(54) **Straddle-type vehicle**
Spreitzsitz-Fahrzeug
Véhicule du type monté à califourchon

(30) Priority: 01.03.2006 JP 2006054658
(43) Date of publication of application: 05.09.2007
(73) Proprietor: Yamaha Hatsudoki Kabushiki Kaisha, Iwata-shi, Shizuoka-ken 438-8501 (JP)
(72) Inventor: Nobuhira, Takayuki, Iwata-shi Shizuoka-ken 438-8501 (JP); Ozawa, Toshiaki, Iwata-shi Shizuoka-ken 438-8501 (JP)
(74) Representative: Grünecker, Kinkeldey, Stockmair & Schwanhäusser Anwaltssozietät

(56) References cited:
- JP-A- 5 319 340
- JP-A- 6 247 363
- JP-A- 8 026 162
- US-A- 5 040 632
- US-A1- 2005 279 556

## Description

The present invention relates to a straddle-type vehicle according to the preamble of independent claim 1. Such a straddle-type vehicle can be taken from the prior art document JP 8-26162. Said prior art document teaches a straddle-type vehicle having a body frame and several side cover means. An air cleaner cover provides downside and upside continuous cover parts and a curved cover section that extends inwards in vehicle width direction.

In the motorcycle, there is a case where an on-vehicle component having been mounted to a body frame is covered by side covers from the left/right sides. For example, in Patent Document 1, there is adopted a structure in which between a tank rail and a fuel tank there is covered by a resin-made side cover.
Patent Document 1: JP-A-2003-11872 Gazette

By the way, in the case where, like the above conventional motorcycle, there has been made the structure in which between the tank rail and the fuel tank there is covered by the side cover, the side cover functions only as a mere exterior trim component, and an external appearance is liable to become simple one. On the other hand, there is also one in which a metal-made side cover is adopted, and there has been made so as to cause the external appearance to have a change while causing the metal-made side cover to function as a reinforcing member. However, if it is attempted to dispose the metal-made side cover, there is a problem that a weight increases and a cost rises.

It is an object of the present invention is to provide a straddle-type vehicle as indicated above which is capable of obtaining the external appearance rich in change while suppressing an increase in weight and a rise in cost.

According to the present invention said object is solved by a straddle-type vehicle having the features of independent claim 1. Preferred embodiments are laid down in the dependent claims.

Accordingly, it is provided a straddle-type vehicle, in particular motorcycle, comprising a body frame, and a body cover covering a side of the vehicle, wherein the body cover comprises a first cover with downside and upside continuous cover parts, forming a first face of the body cover, and a stepped-down cover part forming a second face of the body cover, placed more inside in the vehicle width direction than the first face.

Preferably, a first edge part of the upside continuous cover part is formed such that the first face adjoins the body frame.

Further, preferably a first edge part of the downside continuous cover part is formed such that the first face adjoins a rear arm bracket.

Still further, preferably an edge part of the stepped-down cover part is formed such that the second face adjoins the body frame, and the first face.

According to a preferred embodiment, the first cover has the first face, which adjoins the body frame, has a width finer than a width of a portion to which there adjoins the body cover in the body frame, and extends in a direction having an angle with respect to a direction along which the body frame extends.

Preferably, the first cover has the second face, which adjoins the body frame and the first face, and which is placed in a vehicle width direction inside than the body frame and the first face.

Further, preferably the first face and the second face in the first cover have different outer surfaces.

Still further, preferably the first cover comprises a bent part having been bending-formed in the vehicle width direction inside in an edge part in a side opposite to an edge adjoining the second face among edges that the first face has.

According to another preferred embodiment, the bent part is connected to a second cover having been disposed in the vehicle width direction inside.

Preferably, the bent part is attached to the second cover.

Further, preferably, as to the first face, its portion separating from the body frame enters the vehicle width direction inside of a third cover having been disposed in a vehicle width direction outside.

Still further, preferably the first cover comprises the plural first faces, and the second face is disposed between the first faces.

Yet further still, preferably, as to the first cover, the first faces are mutually connected in a position being separated from the body frame, and a portion being surrounded by the plural first faces having been mutually connected and the body frame becomes the second face.

Beneficially, the first cover has an attaching part having been disposed so as to be concealed inside a detachable vehicle component, and the attaching part is detachably attached to the body frame.

According to yet another preferred embodiment, the vehicle component is a seat, and the seat is made so as to be attachable/detachable without using a tool.

Preferably, the seat is detachably supported by the body frame, and possesses a lock mechanism performing a lock and an unlock by a key operation.

Further, preferably, the first face covers a frame member constituting one part of the body frame.

Still further, preferably the frame member is attached to a portion to which there adjoins the first cover of the body frame through an attaching flange part having been provided in the body frame, and the first cover is detachably attached to the attaching flange part.

Beneficially, the body frame comprises one pair of left/right tank rails having been disposed below a fuel tank, and the first cover adjoins the tank rails.

Preferably, the frame member is a rear part frame extending from a portion to which there adjoins the first cover of the body frame to a vehicle rearward, thereby supporting the seat.

Further, preferably the first cover is made of a resin.

In the following, the present invention is explained in greater detail with respect to several embodiments thereof in conjunction with the accompanying drawings, wherein:
- Fig. 1: is a side view of a motorcycle according to one embodiment,
- Fig. 2: is a side view of a side cover having been disposed in the motorcycle,
- Fig. 3: is a side view of a front-side side cover of the side cover,
- Fig. 4: is a side view of the front-side side cover,
- Fig. 5: is a front view of the front-side side cover,
- Fig. 6: is a sectional view (VI - VI line sectional view of Fig. 4) of the front-side side cover,
- Fig. 7: is a sectional view (VII - VII line sectional view of Fig. 4) of a positioning part of the front-side side cover,
- Fig. 8: is a view of the positioning part of the front-side side cover,
- Fig. 9: is a bottom view of the front-side side cover,
- Fig. 10: is a sectional view (X - X line sectional view of Fig. 9) of the front-side side cover, and
- Fig. 11: is a sectional view (XI - XI line sectional view of Fig. 3) of the front-side side cover.

### Description of Reference Numerals:

3 tank rail (body frame)
4 rear arm bracket
5 seat rail
6 seat stay (rear part frame)
6a attaching flange
13 seat (vehicle component)
38 side cover (body cover)
39a front fender part (second cover)
41 front-side side cover (first cover)
41a downside continuous cover part (first face)
41b upside continuous cover part (first face)
41c stepped-down cover part (second face)
41e bent part
42 outside side cover (third face)

Hereunder, an implementation mode of the present embodiment is explained on the basis of the annexed drawings.

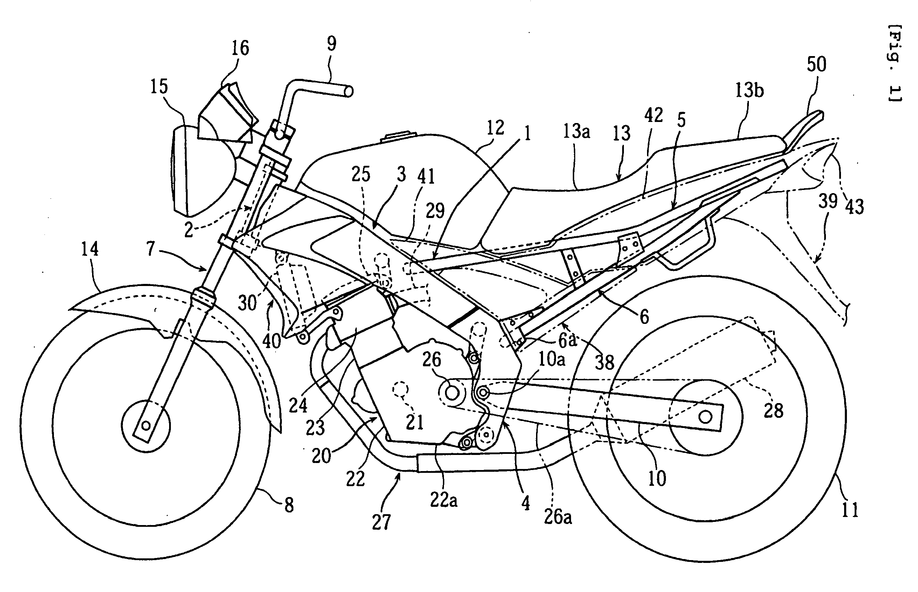

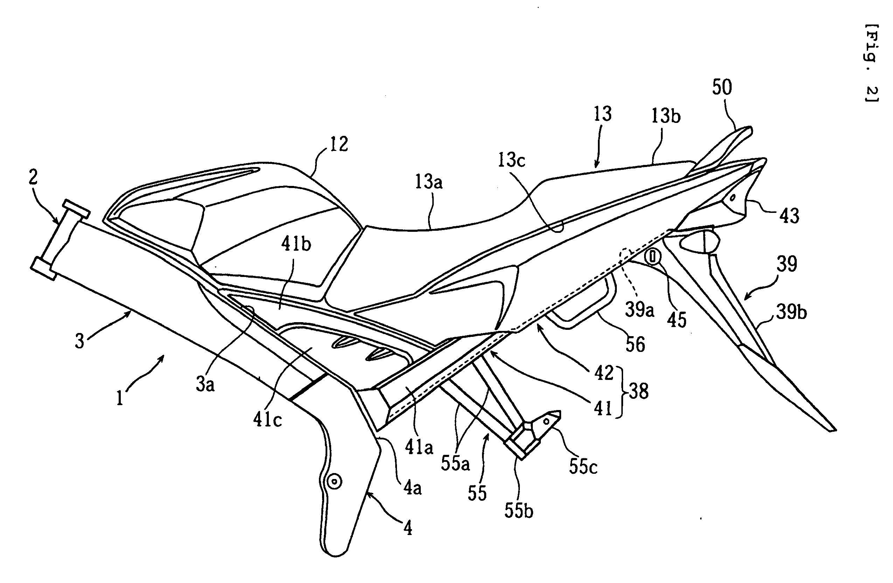

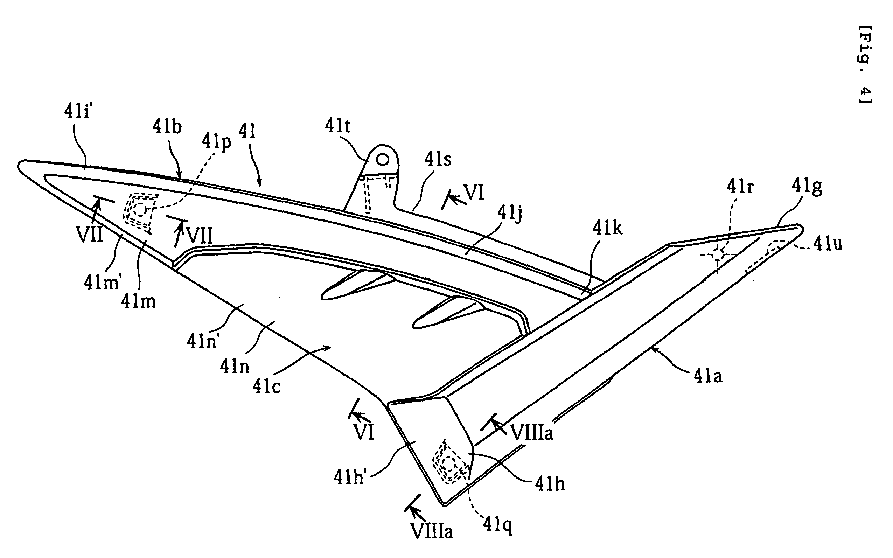

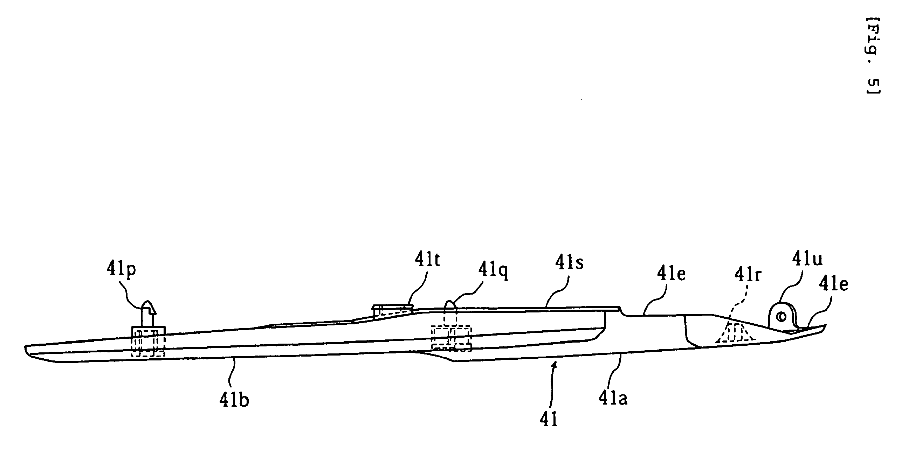

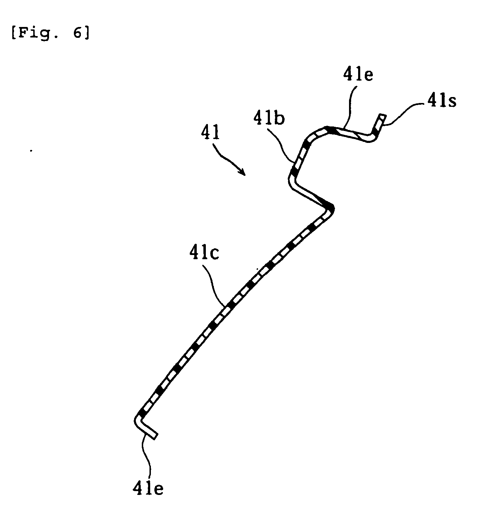

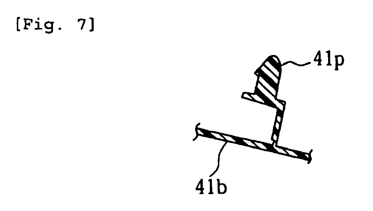

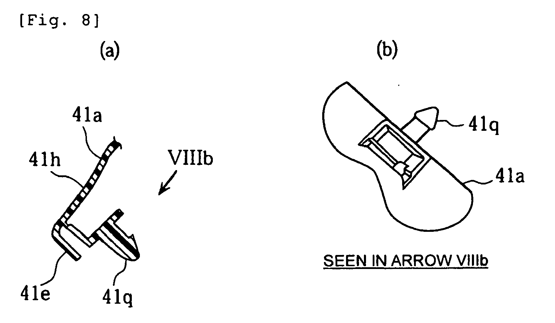

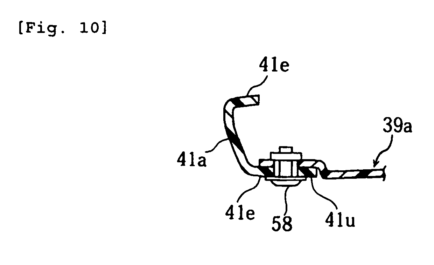

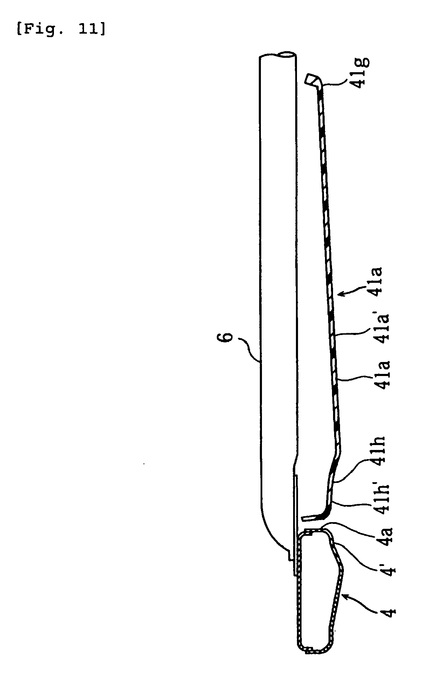

Fig. 1 to Fig. 11 are views for explaining a motorcycle according to one embodiment of the present teaching. Incidentally, front/rear and left/right, which are mentioned in the present embodiment, mean those having been seen under a state that a person has seated on a seat.

In the drawings, 1 denotes a body frame of the motorcycle, and the body frame 1 possesses a head pipe 2 placed in a front end of the body frame, left/right tank rails 3, 3 extending slantingly downward from the head pipe 2 to a vehicle rearward, left/right rear arm brackets 4, 4 extending downward while continuing to rear ends of the left/right tank rails 3, 3, left/right seat rails 5, 5 extending slantingly upward from the left/right tank rails 3, 3 to the vehicle rearward, and left/right seat stays 6, 6 being connected to the rear parts of the left/right seat rails 5, 5 and the left/right rear arm brackets 4, 4 while being bridged.

The left/right tank rails 3, 3 and the left/right rear arm brackets 4, 4 are ones having been formed by an extrusion forming or a welding of plural sheet metals. Further, the left/right seat rails 5, 5 and the left/right seat stays 6, 6 are ones having been formed by a metal pipe. The left/right seat stays 6, 6 are connected by welding to the rear arm brackets 4, 4 through metal-sheet-made attachment flanges 6a, 6a having been fixed to front end parts.

To the head pipe 2, a front fork 7 is supported so as to be capable of being steered left and right. In a lower end of the front fork 7, a front wheel 8 is shaft-supported and, to its upper end, a steering handle 9 is attached. Further, a front fender 14 covering an upper edge of the front wheel 8 is attached to the front fork 7.

Further, a headlight 15 is disposed in a front side of the head pipe 2 of the front fork 7, and a meter device 16 having a speed meter and the like is disposed above the headlight 15.

To the left/right rear arm brackets 4, 4, a front end part of a rear arm 10 is supported so as to be capable of swinging up and down through a pivot shaft 10a. In a rear end of the rear arm 10, a rear wheel 11 is shaft-supported and, between the rear arm 10 and the rear arm bracket 4, a rear suspension (not shown in the drawing) is disposed.

A fuel tank 12 is mounted on the left/right tank rails 3, 3, and a seat 13 for two riders is mounted on the left/right seat rails 5, 5 in a rear side of the fuel tank 12. In a rear edge part of the seat 13, there is disposed a grab bar 50 that a rear seat rider grasps.

A water-cooled four-stroke engine 20 is mounted below the left/right tank rails 3, 3. The engine 20 is one of a structure in which a cylinder block 23, a cylinder head 24 and a head cover 25 have been stacked and bolt-fastening-connected to a crank case 22 in which a crank shaft 21 being laterally disposed in a vehicle width direction has been accommodated.

A transmission case 22a incorporating in a transmission (not shown in the drawing) is monolithically formed in a rear side of the crank case 22. There is adapted such that an output shaft 26 taking out an engine rotation through the transmission is disposed in the transmission case 22a, and the rear wheel 11 is rotation-driven by the output shaft 26 through a chain 26a.

An exhaust pipe 27 is connected to a front wall of the cylinder head 24, and the exhaust pipe 27 is connected to a muffler 28 having been disposed in a right side of the rear wheel 11 while passing below the engine 20. An intake pipe 29 is connected to a rear wall of the cylinder head 24, and the intake pipe 29 extends rearward between the left/right tank rails 3, 3 and is connected to an air cleaner (not shown in the drawing). Further, in a forward upper part of the engine 20, there is disposed a radiator 30 for holding an engine cooling water to a predetermined temperature.

The seat 13 is one in which a front part seat 13a on which a driver seats and a rear part seat 13b on which a rear seat rider seats have been monolithically formed. A front end part of the seat 13 is detachably engagement-supported to the fuel tank. Further, a rear end part of the seat 13 is locked through a lock mechanism (not shown in the drawing) having been disposed between the left/right seat rails 5, 5. The lock mechanism becomes capable of being unlocked by key-operating a key cylinder 45 being disposed in a rear fender part 39b mentioned later. By unlocking by this key operation, the seat 13 can be detached upward.

Front end parts of the left/right tank rails 3, 3 and an outside of the radiator 30 are covered by resin-made front covers 40, 40. The left/right front covers 40, 40 function as an air scoop introducing a travelling wind to the radiator 30.

Outsides of the left/right seat rails 5, 5 and the seat stays 6, 6 are covered by resin-made left/right side covers 38, 38. The left/right side cover 38 is divided into a front-side side cover (first cover) 41 and a rear-side side cover (third cover) 42.

In lower faces of the left/right side covers 38, 38, there is disposed a rear fender 39 covering an upward of the rear wheel 11. This rear fender 39 has a front fender part (second cover) 39a covering a downside of the left/right seat stay 6 over a front/rear direction approximate whole length of this, and a rear fender part 39b downwardly extending slantingly rearward from a rear end of the front fender part 39a.

The left/right rear-side side covers 42, 42 extend so as to cover between a left/right lower edge 13c of the seat 13 and the seat stay 6 and form a streamline shape in a vehicle front/rear direction. Further, a tail light 43 is mounted to a rear end opening of the left/right rear-side side covers 42, 42.

Tandem footrests 55, 55 supporting feet of the rear seat rider are attached to front parts of the left/right seat stays 6, 6. The left/right tandem footrests 55 are fixed to the left/right seat stays 6, 6 by welding, and each of them has two front/rear pipe-made footrest arms 55a, 55a extending rearward slantingly downward from the seat stay 6, a footrest bracket 55b having been fixed to lower ends of the footrest arms 55a, 55a, and a foot putting member 55c being supported by the footrest bracket 55b so as to be turnable between its use position and its storage position.

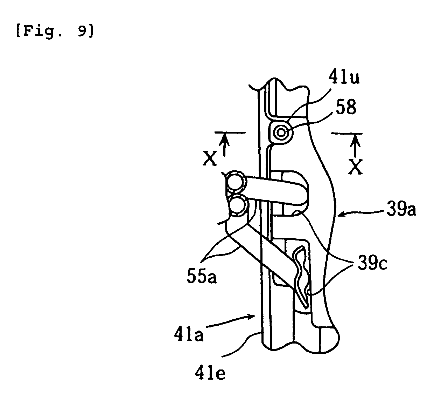

The footrest arms 55a, 55a extend downward from the seat stays 6, 6 while being inserted through notches 39c being formed in a front fender part 39a (refer to Fig. 9). A seat stay 6 connection portion of each footrest arm 55a is approximately covered by the front fender part 39a, and prevented from being seen from an outside.

Further, to a rear side of the tandem footrest arm 55 of the left seat stay 6, there is attached a grip 56 grasped when using a center stand (not shown in the drawing).

The left/right front-side side covers 41, 41 have, when seen from a vehicle side, an approximately inverse triangle shape covering a portion being surrounded by the tank rail 3, the rear arm bracket 4, the fuel tank 12, the seat 13 and the rear-side side cover 42.

Within the left/right front-side side covers 41, 41, there are disposed a recovery tank (not shown in the drawing) supplying a cooling water to the radiator 30, a fuel supply pipe supplying a fuel to the engine 20, a power source connector (not shown in the drawing), and the like.

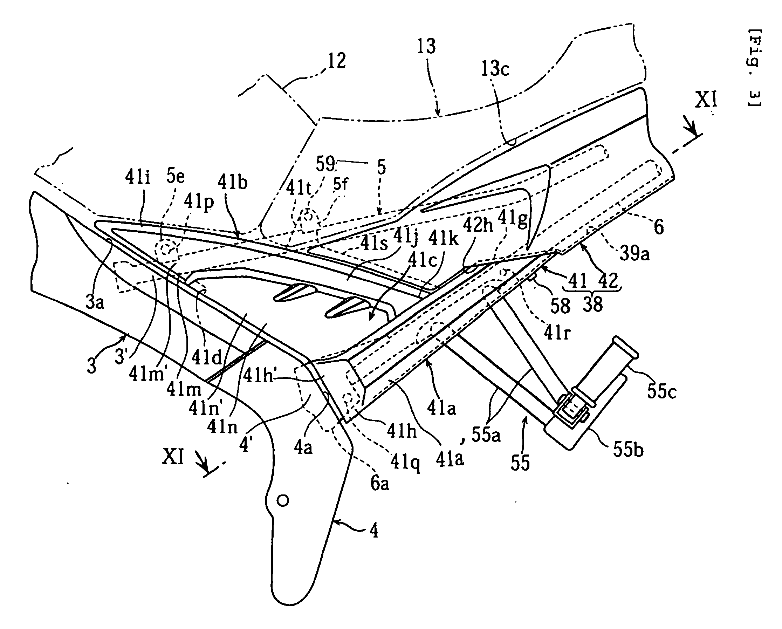

Further, in a portion facing on a carburetor (not shown in the drawing) of the right front-side side cover 41, there is formed an adjusting notch 41d for adjusting an idling rotation rate (refer to Fig. 3). Incidentally, Fig. 3 shows the left front-side side cover 41, and the notch 41d is provided only in the right front-side side cover 41.

Since the left/right front-side side covers 41 have a left/right symmetrical shape, there is detailedly explained about the left front-side side cover 41.

The left front-side side cover (first cover) 41 has a first edge part being disposed so as to adjoin the body frame. Detailedly, the front-side side cover 41 has a downside continuous cover part (first face) 41a, an upside continuous cover part (first face) 41b, and a stepped-down cover part (second face) 41c.

The downside continuous cover part (first face) 41a adjoins a rear slant face 4a of the rear arm bracket 4, extends from the rear slant face 4a in a direction having a predetermined angle with respect to a direction along which the tank rail 3 extends, concretely slantingly upward in a vehicle rear, and is disposed so as to cover an outer side of the seat stay (rear frame) 6.

The upside continuous cover part (first face) 41b adjoins a rear slant face 3a of the tank rail 3, and extends a little slantingly downward from the rear slant face 3a while somewhat curving toward a longitudinal direction center part of the downside continuous cover part 41a.

The stepped-down cover part (second face) 41c is placed in a portion being surrounded by the upside/downside continuous cover parts 41b, 41a and the tank rail 3, and forms an approximately flat face having been stepped-down-formed so as to be placed in a vehicle width direction inside than the tank rail 3 and the cover parts 41b, 41a. The upside/downside continuous cover parts 41b, 41a are connected in a position being separated from the tank rail 3.

An adjacent edge part (first edge part) 41h adjoining the rear arm bracket 4 of the downside continuous cover part 41a and an adjacent edge part (first edge part) 41m adjoining the tank rail 3 of the upside continuous cover part 41b constitute one portion between the adjacent edge parts of the front-side side cover 41, and an adjacent edge part 41n of the stepped-down cover part 41c, which adjoins the tank rail 3 and the rear arm bracket 4, constitutes a remaining portion of the adjacent edge part of the front-side side cover 41.

And, a most outside face 41h' of the adjacent edge part 41h is placed in an approximately the same position as an edge part 4' of the adjoining rear arm bracket 4 in a vehicle width direction. Further, a most outside face 41m' of the adjacent edge part 41m is placed in approximately the same position as an edge part 3' of the adjoining tank rail 3 in the vehicle width direction. Additionally further, a most outside face 41n' of the adjacent edge part 41n has a stepped-down state so as to be placed in the vehicle width direction inside than the edge parts 3', 4' of the tank rail 3 and the rear arm bracket 4.

The downside continuous cover part 41a has, if this is seen in section so as to be crossed, an approximately U-letter shape opening in the vehicle width direction inside. This downside continuous cover part 41a extends more rearward than a connection part of the upside continuous cover part 41b. More detailedly, a rear edge part 41g of the downside continuous cover part 41a enters so as to be placed in an inside of a notch part 42h of the rear-side side cover (third cover) 42. By this, the downside continuous cover part 41a exhibits an external appearance like the body frame extending rearward while passing through an inside of the rear-side side cover 42.

The upside continuous cover part 41b has, if this is seen in section so as to be crossed, the approximately U-letter shape opening in the vehicle width direction inside. A front end part 41i of the upside continuous cover part 41b becomes an approximately pointed shape, an intermediate part 41j is finer than the front end part 41i, and a rear end part 41k becomes widened toward the end and is connected to the downside continuous cover part 41a.

By this, the upside continuous cover part 41b exhibits a frame-like external appearance connecting the rear slant face 3a of the tank rail 3 and the downside continuous cover part 41a, and an external appearance supporting the fuel tank 12.

The stepped-down cover part 41c has the stepped-down state with respect to the upside/downside continuous cover parts 41b, 41a in the vehicle width direction inside. By this, the stepped-down cover part 41c exhibits a proper external appearance of the cover covering a portion being surrounded by the upside/downside cover parts 41b, 41a and the tank rail 3.

The upside/downside continuous cover parts 41b, 41a and the stepped-down part 41c have outer surfaces comprising different grain patterns. Detailedly, the upside/downside continuous cover parts 41b, 41a are finished to be the outer surfaces having external appearances like a frame, and the stepped-down cover part 41c is finished to be the outer surface having an external appearance like a cover, which differs from the frame. Incidentally, the upside/downside continuous cover parts 41b, 41a and the stepped-down cover part 41c may be painted in different colors. Further, a graphic may be adhered only to one, or a graphic whose external appearance differs may be adhered to each.

The front-side side cover 41 has in its outer periphery part a bent part 41e being bending-formed in the vehicle width direction inside. By this, a rigidity of the whole front-side side cover 41 is increased.

The downside continuous cover part 41a adjoins the adjacent edge part 41h, and has a continuous part (second edge part) 41a' extending in a direction separating rearward from the rear arm bracket 4. The bent part 41e in a downside of the continuous part 41a' is formed so as to be connected to the front fender part (second cover) 39a. By the bent parts 41e, 41e of the left/right front-side side covers 41, 41 and the front fender part 39a, downsides of the left/right seat stays 6, 6 are closed, thereby preventing a splashed-up water by the rear wheel 11 from entering into the front-side side cover 41.

The front-side side cover 41 is detachably attached to the body frame 1. By detaching the front-side side cover 41, it is possible to perform inspections and maintenances of the recovery tank, the fuel supply pipe, the power source connector, and the like.

In the front end part 41i of the upside continuous cover part 41b and the front end part (adjacent edge part) 41h of the downside continuous cover part 41a, there are monolithically formed front/rear positioning protrusions 41p, 41q respectively protruding in the vehicle width direction inside. Further, in a rear end part of the downside continuous cover part 41a, there is formed a positioning part 41r.

The front positioning protrusion 41p is detachably insertion-fixed from an outer side to an engaging hole of a positioning bracket 5e being connected to a front end part of the seat rail 5 so as to stand. Further, the rear positioning protrusion 41q is detachably insertion-fixed from the outer side to an engaging hole of an attaching flange 6a of the seat stay 6.

In a rear half part of the upside bent part 41e of the upside continuous cover part 41b, there is formed a flange part 41s protruding upward from an inner edge of the bent part 41e and entering an inside of a front edge part of the rear-side side cover 42. In a front end part of the flange part 41s, there is formed an attaching part 41t extending upward so as to be concealed inside the seat 13 when seen from a side.

The attaching part 41t is detachably fixed to an attaching bracket 5f, which has been connected so as to stand in a rear side of the positioning bracket 5e of the seat rail 5, by a bolt 59 having been mounted from the outer side.

In a rear end part of the downside bent part 41e of the downside continuous cover part 41a, there is formed an attaching part 41u protruding subsequent to the bent part 41e in the vehicle width direction inside. This attaching part 41u extends so as to overlap to a lower face of the front fender part 39a, and is detachably fixed to the front fender part 39a by an attaching screw 58 being meshed from below.

In order to detach the front-side side cover 41, the attaching screw 58 is removed from an outer downside, the seat 13 is detached upward by releasing a lock mechanism, and the bolt 59 is detached from the outer side. Under this state, the front-side side cover 41 is detached by outwardly pulling out the front/rear positioning protrusions 41p, 41q.

According to the present embodiment, the downside continuous cover part 41a of the front-side side cover 41 is made a shape extending in a direction having an angle with respect to a direction along which the tank rail 3 extends, and the adjacent edge part 41h adjoining the rear arm bracket 4 of the cover part 41a is set so as to be placed in approximately the same position in the vehicle width direction as the edge part 4' of the rear arm bracket 4 to which there adjoins the most outside face 41h' of the adjacent edge part 41h. And, additionally, the adjacent edge part 41n of the stepped-down cover part 41c is stepped-down-formed so as to be biased in the vehicle width direction more inside than the edge parts 3', 4' of the tank rail 3, to which there adjoins the most outside face 41n' of the adjacent part 41n, and the rear arm bracket 4. As a result, it follows that the downside continuous cover part 41a exhibits a frame-like external appearance, and the stepped-down cover part 41c exhibits a proper external appearance of the cover. Like this, by suitably setting a shape, a dimension and the like of the downside continuous cover part 41a of the front-side side cover 41 made of a resin, a frame design rich in change can be realized without bringing about the increase in weight and the rise in cost.

Further, since the adjacent edge part 41m, of the upside continuous cover part 41b, adjoining the tank rail 3 has been set so as to be placed approximately the same position in the vehicle width direction as the edge part 3' of the tank rail 3 to which there adjoins the most outside face 41m' of the adjacent edge part 41m, it follows that the upside continuous cover part 41b exhibits the frame-like external appearance, so that it is possible to realize a novel frame design, which does not exist in olden times, in a low cost by the upside continuous cover part 41b and the downside continuous cover part 41a.

In the present embodiment, since the front-side side cover 41 has been constituted by the downside/upside continuous cover parts 41a, 41b and the stepped-down cover part 41c placed in the vehicle width direction inside than the former, an outer surface becomes a shape having irregularities, not flat, so that the rigidity of the front-side side cover 41 becomes high.

Further, by the front-side side cover 41, for the driver, a recognition of a riding position becomes easy. That is, although there is the fact that, at a long time ride time, also the riding position changes from a disturbance in riding posture, in a case where the front-side side cover 41 of the present embodiment is placed in an inside of legs having been performed a knee grip and the like, it is possible to grasp positions of the legs, in turn, the riding position by recognizing a changeover part (step) between the downside/upside continuous cover parts 41a, 41b and the stepped-down cover part 41c in the inside of the legs.

Additionally further, since the upside/downside continuous cover parts 41b, 41a and the stepped-down cover part 41c have been finished to be the outer surfaces consisting of the different grain patterns, they can be easily partitioned in a low cost into the frame-like external appearance and the proper appearance of the cover, and thus it is possible to finish more frame-likely.

In the present embodiment, in the outer periphery edge of the front-side side cover 41, since there has been formed the bent part 41e extending while being curved in the vehicle width direction inside, it is possible to increase the rigidity of the whole front-side side cover 41, so that a deformation by an external force, and the like can be prevented.

Since the bent part 41e has been formed in the continuous part 41a', of the downside continuous cover part 41a, extending in the direction separating from the rear arm bracket 4 while adjoining the adjacent edge part 41h, and the bent part 41e has been formed so as to be connected to the front fender part 39a, it is possible to reliably prevent the splashed-up water by the rear wheel 11 and the like from entering below the seat 13.

Further, since the attaching part 41u has been formed in the bent part 41e, and the attaching part 41u has been fixed to the front fender part 39a by the attaching screw 58 being mounted from below, a downside of the front-side side cover 41 can be attached by utilizing the front fender part 39a, so that it is possible to make a separate component such as bracket unnecessary.

In the present embodiment, since the continuous part 41a' of the downside continuous cover part 41a is extended slantingly upward so as to be separated from the rear arm bracket 4, and the rear edge part 41g has been entered so as to be placed in the inside of the rear-side side cover 42, the downside continuous cover part 41a can obtain such an external appearance as to extend more rearward in the rear-side side cover 42, and thus it is possible to finish more frame-likely.

Further, since the downside continuous cover part 41a has been disposed so as to cover the seat stay 6, even in a case where the seat stay 6 may be a fine pipe in its strength, it is possible to obtain an external appearance like a strong frame.

In the present embodiment, since the attaching part 41t extending so as to be concealed inside the seat 13 has been formed in the front-side side cover 41, and the attaching part 41t has been fixed to the attaching bracket 5f of the seat rail 5 by the bolt 59, it is possible to prevent a deterioration of the external appearance due to the fact that the attaching part 41t is seeable and, from the fact that the attaching part 41t is exposed upward by removing the seat 13, a removal working of the front-side side cover 41 can be easily performed.

Further, since the seat 13 can be removed by releasing a lock by a key operation, it is possible to more easily perform an attachment/detachment working of the front-side side cover 41.

In the present embodiment, since the positioning protrusion 41q of the downside continuous cover part 41a has been detachably attached by insertion-fixing the seat stay 6 to a hole of the attaching flange 6a connected to the rear arm bracket 4, it is possible to attach the front-side side cover 41 by such a simple structure as to form only the hole of the attaching flange 6a.

Incidentally, in the above embodiment, although there has been explained a case having the down side cover part 41a covering the seat stay 6 and the upside continuous cover part 41b connecting the downside continuous cover part 41a and the tank rail 3, the present teaching is not limited to this. For example, only the downside continuous cover part 41a may suffice and, additionally other than the upside/downside continuous cover parts, there may be provided other continuous cover part. In this case, since the front-side side cover 41 of the present embodiment is made of the resin, the continuous cover part can be freely set.

Further, in the present embodiment, although there has been explained a case where the body frame (tank rail) is one like an angular pipe, of course the present teaching can be applied also to a motorcycle having a round pipe-like body frame.

The description above discloses (amongst others), an embodiment of a motorcycle having possessed a body frame which is exposed to a side, has a predetermined width in its shape seen from the side, and extends in a predetermined direction, and a body cover covering a vehicle side, and characterized in that the body cover possesses a first cover having been disposed so as to adjoin the body frame, and the first cover has a first face which adjoins the body frame, has a width finer than a width of a portion to which there adjoins the body cover in the body frame, and extends in a direction having an angle with respect to a direction along which the body frame extends, and a second face which adjoins the body frame and the first face, and is placed in a vehicle width direction inside than the body frame and the first face.

In the context of the present teaching, the "direction having the (predetermined) angle" means a "direction not parallel to the direction along which the body frame extends".

The advantage of this embodiment is that, since the first cover adjoining the body frame has been made a constitution having the first face which has the width finer than the body frame and extends in the direction having the angle with respect to the direction along which the body frame extends, and the second face which is placed in the vehicle width direction inside than the first face and the body frame, it follows that a portion of the first face of the first cover exhibits a frame-like external appearance, and a portion of the second face exhibits a proper external appearance of the cover. By this, the external appearance rich in change can be realized without bringing about the increase in weight and the rise in cost by suitably setting shapes, dimensions and the like of the first face and the second face of the first cover.

The description further discloses an embodiment of a motorcycle having possessed a body frame which is exposed to a side, has a predetermined width in its shape seen from the side, and extends in a predetermined direction, and a body cover covering a vehicle side, wherein the body cover possesses a first cover having been disposed so as to adjoin the body frame, and the first cover has a first face which adjoins the body frame, has a width finer than a width of a portion to which there adjoins the body cover in the body frame, and extends in a direction having an angle with respect to a direction along which the body frame extends, and a second face which adjoins the body frame and the first face, and is placed in a vehicle width direction inside than the body frame and the first face.

Further, the first face and the second face in the first cover may have different outer surfaces.

According to a further preferred embodiment, the first cover possesses a bent part having been bending-formed in the vehicle width direction inside in an edge part in a side opposite to an edge adjoining the second face among edges that the first face has.

Further, the bent part may be connected to a second cover having been disposed in the vehicle width direction inside.

Further, the bent part may be attached to the second cover.

According to a further preferred embodiment, as to the first face, its portion separating from the body frame enters the vehicle width direction inside of a third cover having been disposed in a vehicle width direction outside.

Further, the first cover may possess the plural first faces, and the second face may be disposed between the first faces.

Beneficially, as to the first cover, the first faces are mutually connected in a position having been separated from the body frame, and a portion having been surrounded by the plural first faces having been mutually connected and the body frame becomes the second face.

Preferably, the first cover has an attaching part having been disposed so as to be concealed inside a detachable vehicle component, and the attaching part is detachably attached to the body frame.

Further, preferably the vehicle component is a seat, and the seat is made so as to be attachable/detachable without using a tool.

Still further, preferably, the seat is detachably supported by the body frame, and possesses a lock mechanism performing a lock and an unlock by key operation.

According to a further preferred embodiment, the first face covers a frame member constituting one part of the body frame.

Beneficially, the frame member is attached to a portion to which there adjoins the first cover of the body frame through an attaching flange part having been provided in the body frame, and the first cover is detachably attached to the attaching flange part.

According to a further preferred embodiment, the body frame possesses one pair of left/right tank rails having been disposed below a fuel tank, and the first cover adjoins the tank rails.

Beneficially, the frame member is a rear part frame extending from a portion to which there adjoins the first cover of the body frame to a vehicle rearward, thereby supporting the seat.

According to still another preferred embodiment, the first cover is made of a resin.

The present description further discloses, in order to provide a motorcycle, in which an external appearance rich in change is obtained while suppressing a rise in cost, a preferred embodiment which possesses a first cover (front-side side cover) 41 having first edge parts (adjacent parts) 41h, 41m, 41n having been disposed so as to adjoin a body frame (rear arm bracket) 4, one portions 41h, 41m among the first edge parts of the first cover 41 are placed in approximately the same position in a vehicle width direction as most outside faces 4', 3' of an outer surface of the body frame 4 to which there adjoin most outside faces 41h', 41m' of outer surfaces of the one portions, and the remaining portion 41n of the first edge parts is placed in a vehicle width direction inside than the most outside face 4' of the outer surface of the body frame 4 to which there adjoins a most outside face 41n' of an outer surface of the remaining portion.

## Claims

1. Straddle-type vehicle comprising a body frame (1), and a body cover (38) covering a side of the vehicle, wherein the body cover (38) comprises a first cover with downside and upside continuous cover parts (41a,41b), forming a first face of the body cover (38), and a further cover part (41c) forming a second face of the body cover, placed more inside in the vehicle width direction than the first face,
**characterized in that**
the downside and upside continuous cover parts (41a,41b) are formed with a U-letter shape cross section being open to the inside of the vehicle in the vehicle width direction and said second face is an approximately flat face so that the further cover part is a stepped-down cover part (41c) of the body cover, wherein the first face of the body cover (38) adjoins the body frame (1), the first face extends from said body frame (1) in a direction having an angle with respect to a direction along which the body frame (1) extends, and a width of said first face is finer than a width of a portion of the body frame (1) at the position where the first face of the body cover (38) adjoins the body frame (1).

2. Straddle-type vehicle according to claim 1, **characterized in that** a first edge part (41m) of the first face at the upside continuous cover part (41 b) adjoins the body frame (1).

3. Straddle-type vehicle according to claim 1 or 2, **characterized in that** a first edge part (41h) of the first face at the downside continuous cover part (41a) adjoins a rear arm bracket (4) of the body frame (1).

4. Straddle-type vehicle according to one of the claims 1 to 3, **characterized in that** an edge part (41n) of the stepped-down cover part (41c) is formed such that the second face adjoins the body frame (1) and the first face.

5. Straddle-type vehicle according to one of the claims 1 to 4, **characterized in that** the first cover has the second face which adjoins the body frame (1) and the first face, and which is placed further in vehicle width inside direction than the body frame (1) and the first face.

6. Straddle-type vehicle according to one of the claims 1 to 5, **characterized in that** the first cover comprises a bent part (41e) having been bending-formed to the inside of the vehicle in the vehicle width direction in an edge part of the stepped-down cover part (41c) at a side edge of said second face opposite to an edge of the first face adjoining the second face.

7. Straddle-type vehicle according to claim 6, **characterized in that** the bent part (41e) is connected to a second cover (39a) having been disposed to the inside of the vehicle in the vehicle width direction.

8. Straddle-type vehicle according to claim 7, **characterized in that** the bent part (41e) is attached to the second cover (39a).

9. Straddle-type vehicle according to one of the claims 1 to 8, **characterized in that** the first face and the second face in the first cover have different outer surfaces.

10. Straddle-type vehicle according to one of the claims 1 to 9, **characterized in that**, a portion of the first face enters an inside in the vehicle width direction of a third cover (42) being disposed on the outside of the vehicle in the vehicle width direction.

11. Straddle-type vehicle according to one of the claims 1 to 10, **characterized in that** the first cover comprises a plural first faces, and the second face is disposed between the first faces.

12. Straddle-type vehicle according to claim 11, **characterized in that**, as to the first cover, the first faces are mutually connected in a position being separated from the body frame (1), and a portion being surrounded by the plural first faces having been mutually connected and the body frame (1) becomes the second face.

13. Straddle-type vehicle according to one of the claims 1 to 12, **characterized in that** the first cover has an attaching part having been disposed so as to be concealed inside a detachable vehicle component, and the attaching part is detachably attached to the body frame (1).

14. Straddle-type vehicle according to claim 13, **characterized In that** the vehicle component is a seat, and the seat is made so as to be attachable/detachable without using a tool.

15. Straddle-type vehicle according to claim 14, **characterized In that** the seat is detachably supported by the body frame (1), and possesses a lock mechanism performing a lock and an unlock by a key operation.

16. Straddle-type vehicle according to one of the claims 1 to 15, **characterized in that** the first face covers a frame member (5,6) constituting one part of the body frame (1).

17. Straddle-type vehicle according to claim 16, **characterized in that** the first cover is detachably attached to an attaching flange part of the frame member (5,6).

18. Straddle-type vehicle according to claim 17, **characterized in that** the frame member (5,6) is a rear part frame extending from a portion at which the first cover adjoins the of the body frame (1) to a vehicle rearward, said rear part frame is supporting a seat.

19. Straddle-type vehicle according to one of the claims 1 to 18, **characterized in that** the body frame (1) comprises one pair of left/right tank rails (3) having been disposed below a fuel tank (12), and the first cover adjoins the tank rails (3).

20. Straddle-type vehicle according to one of the claims 1 to 19, **characterized in that** the first cover is made of a resin.

## Patentansprüche

1. Fahrzeug vom Spreitzsitz- Typ, aufweisend einen Karosserierahmen (1) und eine Karosserieabdeckung (38), die eine Seite des Fahrzeuges abdeckt, wobei die Karosserieabdeckung (38) aufweist eine erste Abdeckung mit unterseitigen und oberseitigen fortlaufenden Abdeckungsteilen (41a, 41b), die eine erste Fläche der Karosserieabdeckung (38) bilden, und ein weiteres Abdeckungsteil (41c), das eine zweite Fläche der Karosserieabdeckung bildet, die weiter innen in Richtung der Fahrzeugbreite als die erste Fläche platziert ist,
**dadurch gekennzeichnet, dass**
die unterseitigen und oberseitigen fortlaufenden Abdeckungsteile (41a, 41b) mit einem U- förmigen Querschnitt ausgebildet sind, der nach innen des Fahrzeuges in Richtung der Breite des Fahrzeuges offen ist, gebildet ist, und die zweite Fläche eine annähernd flache Fläche ist, so dass das weitere Abdeckungsteil ein unten abgestuftes Abdeckungsteil (41c) der Karosserieabdeckung ist, wobei die erste Fläche der Karosserieabdeckung (38) an den Karosserierahmen (1) angrenzt, sich die erste Fläche von dem Karosserierahmen (1) in eine Richtung erstreckt, die einen Winkel in Bezug auf eine Richtung hat, entlang der sich der Karosserierahmen (1) erstreckt, und eine Breite der ersten Fläche geringer als eine Breite eines Abschnittes des Karosserierahmens (1) an einer Position ist, wo die erste Fläche der Karosserieabdeckung (38) an den Karosserierahmen (1) angrenzt.

2. Fahrzeug vom Spreitzsitz- Typ nach Anspruch 1, **dadurch gekennzeichnet, dass** ein erstes Kantenteil (41m) der ersten Fläche an dem oberseitig fortlaufenden Abdeckungsteil (41b) an den Karosserierahmen (1) angrenzt.

3. Fahrzeug vom Spreitzsitz- Typ nach Anspruch 1 oder 2, **dadurch gekennzeichnet, dass** ein erstes Kantenteil (41h) der ersten Fläche an dem unterseitig fortlaufenden Teil (41a) an den Hinterarm- Halter (4) des Karosserierahmens (1) angrenzt.

4. Fahrzeug vom Spreitzsitz- Typ nach Anspruch 1 bis 3, **dadurch gekennzeichnet, dass** ein erstes Kantenteil (41n) des nach unten abgestuften Abdeckungsteils (41 c) derart gebildet ist, dass die zweite Fläche an den Karosserierahmen (1) und die erste Fläche angrenzt.

5. Fahrzeug vom Spreitzsitz- Typ nach einem der Ansprüche 1 bis 4, **dadurch gekennzeichnet, dass** die erste Abdeckung eine zweite Fläche hat, die an den Karosserierahmen (1) und die erste Fläche angrenzt, und die weiter in Richtung des Inneren des Fahrzeuges als der Karosserierahmen (1) und die erste Fläche platziert ist.

6. Fahrzeug vom Spreitzsitz- Typ nach einem der Ansprüche 1 bis 5, **dadurch gekennzeichnet, dass** die erste Abdeckung ein gebogenes Teil (41e) aufweist, das nach Innen des Fahrzeuges in Richtung der Breite des Fahrzeuges in einem Kantenteil des nach unten abgestuften Abdeckungsteils (41c) an einer Seitenkante von der zweiten Fläche, die einer Kante der ersten Fläche, benachbart zu der zweiten Fläche gegenüberliegt, biegegeformt worden ist.

7. Fahrzeug vom Spreitzsitz- Typ nach Anspruch 6, **dadurch gekennzeichnet, dass** das gebogene Teil (41e) mit einer zweiten Abdeckung (39a), die auf einer Innenseite in Richtung der Breite des Fahrzeuges angeordnet ist, verbunden ist.

8. Fahrzeug vom Spreitzsitz- Typ nach Anspruch 7, **dadurch gekennzeichnet, dass** das gebogene Teil (41e) mit der zweiten Abdeckung (39a) verbunden ist.

9. Fahrzeug vom Spreitzsitz- Typ nach einem der Ansprüche 1 bis 8, **dadurch gekennzeichnet, dass** die erste Fläche und die zweite Fläche in der ersten Abdeckung unterschiedliche äußere Oberflächen haben.

10. Fahrzeug vom Spreitzsitz- Typ nach einem der Ansprüche 1 bis 9, **dadurch gekennzeichnet, dass** ein Abschnitt der ersten Fläche in ein Inneres in Richtung der Breite des Fahrzeuges einer dritten Abdeckung (42) eintritt, die auf einer Außenseite des Fahrzeuges in Richtung der Breite des Fahrzeuges angeordnet ist, eindringt.

11. Fahrzeug vom Spreitzsitz- Typ nach einem der Ansprüche 1 bis 10, **dadurch gekennzeichnet, dass** die erste Abdeckung eine Mehrzahl erster Flächen aufweist und die zweite Fläche zwischen den ersten Flächen angeordnet ist.

12. Fahrzeug vom Spreitzsitz- Typ nach Anspruch 11, **dadurch gekennzeichnet, dass** bezüglich der ersten Abdeckung die ersten Flächen gegenseitig in einer Position, die von dem Karosserierahmen (1) getrennt ist, verbunden sind und ein Abschnitt, der durch die Mehrzahl der ersten Flächen, die gegenseitig verbunden sind, und den Karosserierahmen (1) umgeben ist, die zweite Fläche wird.

13. Fahrzeug vom Spreitzsitz- Typ nach einem der Ansprüche 1 bis 12, **dadurch gekennzeichnet, dass** die erste Abdeckung ein Verbindungsteil hat, das angeordnet worden ist, um innerhalb eines lösbaren Fahrzeugbauteils verborgen zu sein, und wobei das Verbindungsteil mit dem Karosserierahmen (1) lösbar verbunden ist.

14. Fahrzeug vom Spreitzsitz- Typ nach Anspruch 13, **dadurch gekennzeichnet, dass** das Fahrzeugbauteil ein Sitz ist und der Sitz hergestellt ist, um ohne Verwendung eines Werkzeuges verbindbar / lösbar zu sein.

15. Fahrzeug vom Spreitzsitz- Typ nach Anspruch 14, **dadurch gekennzeichnet, dass** der Sitz durch den Karosserierahmen (1) lösbar gelagert wird und eine Verriegelungsvorrichtung besitzt, die eine Verriegelung oder eine Entriegelung durch eine Schlüsselbetätigung ausführt.

16. Fahrzeug vom Spreitzsitz- Typ nach einem der Ansprüche 1 bis 15, **dadurch gekennzeichnet, dass** die erste Fläche ein Rahmenteil (5, 6), das einen Teil des Karosserierahmens (1) bildet, abdeckt.

17. Fahrzeug vom Spreitzsitz- Typ nach Anspruch 16, **dadurch gekennzeichnet, dass** die erste Abdeckung mit einem Verbindungsflanschteil des Rahmenteils(5, 6) lösbar verbunden ist.

18. Fahrzeug vom Spreitzsitz- Typ nach Anspruch 16, **dadurch gekennzeichnet, dass** das Rahmenteil (5, 6) ein hinteres Rahmenteil ist, das sich von einem Abschnitt erstreckt, an dem die erste Abdeckung an dem Karosserierahmen (1) nach einer Rückseite des Fahrzeuges angrenzt, wobei das hintere Rahmenteil einen Sitz lagert.

19. Fahrzeug vom Spreitzsitz- Typ nach einem der Ansprüche 1 bis 18, **dadurch gekennzeichnet, dass** der Karosserierahmen (1) ein Paar von linken / rechten Tankschienen (3) aufweist, die unter einem Kraftstofftank (12) angeordnet worden sind, und die erste Abdeckung an die Tankschienen (3) angrenzt.

20. Fahrzeug vom Spreitzsitz- Typ nach einem der Ansprüche 1 bis 19, **dadurch gekennzeichnet, dass** die erste Abdeckung aus einem Kunststoff hergestellt ist.

## Revendications

1. Véhicule de type monté à califourchon comprenant un cadre de carrosserie (1), et une couverture de carrosserie (38) couvrant un côté du véhicule, dans lequel ladite couverture de carrosserie (38) comprend une première couverture avec des parties de couverture continues basse et haute (41a, 41b), formant une première face de la couverture de carrosserie (38) et une autre partie de couverture (41c) formant une seconde face de la couverture de carrosserie, placée plus à l'intérieur dans le sens de la largeur du véhicule que la première face,
**caractérisé en ce que**
les parties de couverture continues basse et haute (41a, 41b) sont formées avec une section transversale en forme de U ouverte vers l'intérieur du véhicule, dans le sens de la largeur dudit véhicule et ladite seconde face est une face approximativement plane, de sorte que la partie de couverture ultérieure soit une partie de couverture abaissée (41c) de la couverture de carrosserie, dans lequel la première face de la couverture de carrosserie (38) rejoint le châssis de carrosserie (1), la première face s'étend depuis ledit châssis de carrosserie (1) dans une direction formant un angle relativement à une direction le long de la laquelle s'étend le châssis de carrosserie (1), et une largeur de ladite première face est plus fine qu'une largeur d'une partie du châssis de carrosserie (1) dans la position où la première face de la couverture de carrosserie (38) rejoint le cadre de carrosserie (1).

2. Véhicule de type monté à califourchon selon la revendication 1, **caractérisé en ce qu'**une première partie de bord (41m) de la première face au niveau de la partie de couverture continue haute (41b) rejoint le châssis de carrosserie (1).

3. Véhicule de type monté à califourchon selon la revendication 1 ou 2, **caractérisé en ce qu'**une première partie de bord (41h) de la première face au niveau de la partie de couverture continue basse (41a) rejoint un support de bras arrière (4) du châssis de carrosserie (1).

4. Véhicule de type monté à califourchon selon l'une des revendications 1 à 3, **caractérisé en ce qu'**une partie de bord (41n) de la partie de couverture abaissée (41c) est formée, de sorte que la seconde face rejoigne le châssis de carrosserie (1) et la première face.

5. Véhicule de type monté à califourchon selon l'une des revendications 1 à 4, **caractérisé en ce que** la première couverture a la secondé face qui rejoint le châssis de carrosserie (1) et la première face et qui est placée plus loin vers l'intérieur, dans le sens de la largeur du véhicule que le châssis de corps (1) et la première face.

6. Véhicule de type monté à califourchon selon l'une quelconque des revendications 1 à 5, **caractérisé en ce que** la première couverture comprend une partie pliée (41e) ayant été formée par pliage vers l'intérieur du véhicule, dans le sens de la largeur dudit véhicule, dans une partie de bord de la partie de couverture abaissée (41c) au niveau d'un bord latéral de ladite seconde face, opposé à un bord de la première face rejoignant la seconde face.

7. Véhicule de type monté à califourchon selon la revendication 6, **caractérisé en ce que** la partie pliée (41e) est reliée à une seconde couverture (39a) qui a été disposée vers l'intérieur du véhicule, dans le sens de la largeur du véhicule.

8. Véhicule de type monté à califourchon selon la revendication 7, **caractérisé en ce que** la partie pliée (41e) est fixée à la seconde couverture (39a).

9. Véhicule de type monté à califourchon selon l'une quelconque des revendications 1 à 8, **caractérisé en ce que** la première face et la seconde face dans la première couverture ont des surfaces extérieures différentes.

10. Véhicule de type monté à califourchon selon l'une quelconque des revendications 1 à 9, **caractérisé en ce qu'**une partie de la première face entre à l'intérieur, dans le sens de la largeur du véhicule, d'une troisième couverture (42) disposée à l'extérieur du véhicule, dans le sens de la largeur du véhicule.

11. Véhicule de type monté à califourchon selon l'une des revendications 1 à 10, **caractérisé en ce que** la première couverture comprend plusieurs premières faces et la seconde face est disposée entre les premières faces.

12. Véhicule de type monté à califourchon selon la revendication 11, **caractérisé en ce que,** en tant que première couverture, les premières faces sont mutuellement reliées dans une position séparée du châssis de la carrosserie (1), et une partie étant entourée par lesdites premières faces ayant été mutuellement raccordées et le châssis de carrosserie (1) devient la seconde face.

13. Véhicule de type monté à califourchon selon l'une des revendications 1 à 12, **caractérisé en ce que** la première couverture a une partie de fixation ayant été disposée de façon à être masquée à l'intérieur d'un élément de véhicule détachable, et la partie de fixation est fixée de manière détachable au châssis de carrosserie (1).

14. Véhicule de type monté à califourchon selon la revendication 13, **caractérisé en ce que** le composant du véhicule est un siège, et le siège est réalisé de façon à pouvoir être fixé/détaché sans utiliser d'outil.

15. Véhicule de type monté à califourchon selon la revendication 14, **caractérisé en ce que** le siège est supporté de manière détachable par le châssis de carrosserie (1) et possède un mécanisme de verrouillage permettant un verrouillage et un déverrouillage par l'opération d'une clé.

16. Véhicule de type monté à califourchon selon l'une des revendications 1 à 15, **caractérisé en ce que** la première face couvre un élément de châssis (5, 6) constituant une partie du châssis de carrosserie (1).

17. Véhicule de type monté à califourchon selon la revendication 16, **caractérisé en ce que** la première couverture est fixée de manière détachable à une partie de bride de fixation de l'élément de châssis (5, 6).

18. Véhicule de type monté à califourchon selon la revendication 17, **caractérisé en ce que** l'élément de châssis (5, 6) est un châssis de partie arrière s'étendant depuis une partie où la première couverture rejoint le châssis de carrosserie (1) vers l'arrière du véhicule, ledit châssis de partie arrière supportant un siège.

19. Véhicule de type monté à califourchon selon l'une des revendications 1 à 18, **caractérisé en ce que** le châssis de carrosserie (1) comprend une paire de rails de réservoir gauche/droit (3) ayant été disposés sous un réservoir de carburant (12) et la première couverture rejoint les rails de carburant (3).

20. Véhicule de type monté à califourchon selon l'une des revendications 1 à 19, **caractérisé en ce que** la première couverture est réalisée en résine.
